# FASCICULE DE BREVET EUROPEEN

(11) **EP 3 212 357 B1**
(45) Date de publication et mention de la délivrance du brevet: **09.08.2023**
(21) Numéro de dépôt: 15797872.7
(22) Date de dépôt: 29.10.2015
(51) Int. Cl.: B23K 1/00, F28F 19/02, F28F 21/08, F28F 19/06, F28D 9/00

(54) **PROCÉDÉ DE FABRICATION D'UNE MATRICE D'ÉCHANGEUR DE CHALEUR RÉSISTANT À LA CORROSION**
VERFAHREN ZUR HERSTELLUNG EINER KORROSIONSBESTÄNDIGEN WÄRMETAUSCHERMATRIX
METHOD OF MANUFACTURING A CORROSION-RESISTANT HEAT EXCHANGER MATRIX

(30) Priorité: 29.10.2014 FR 1460399
(43) Date de publication de la demande: 06.09.2017
(73) Titulaire: Fives Cryo, 88190 Golbey (FR)
(72) Inventeur: MAZET, Thierry, F-54000 Nancy (FR); DIB, Johan, F-88150 Igney (FR); PICARD, Florian, Henri, Ernest, F-88130 Chamagne (FR)
(74) Mandataire: Novagraaf Group
(86) Numéro de dépôt international: PCT/EP2015/075176
(87) Numéro de publication internationale: WO 2016/066771

(56) Documents cités:
- EP-A1- 1 154 218
- EP-A1- 2 617 516
- WO-A1-2004/040038
- DE-A1-102011 103 641
- FR-A1- 2 930 464
- JP-A- H01 217 197
- US-A- 4 645 119
- US-A1- 2011 192 583

## Description

L'invention est relative à un procédé de fabrication d'une matrice métallique d'échangeur de chaleur, comprenant un empilement de composants, notamment de plaques gravées ou d'ondes, de tôles de séparation et de barres, ou une combinaison des deux types d'empilement, lesdits composants étant maintenus les uns par rapport aux autres par des couches de brasure, assurant ainsi la tenue mécanique de la matrice, la matrice comportant en son sein des passages de circulation de fluide, chaque passage de circulation de fluide ayant une paroi interne prévue pour contenir entièrement radialement ledit fluide.

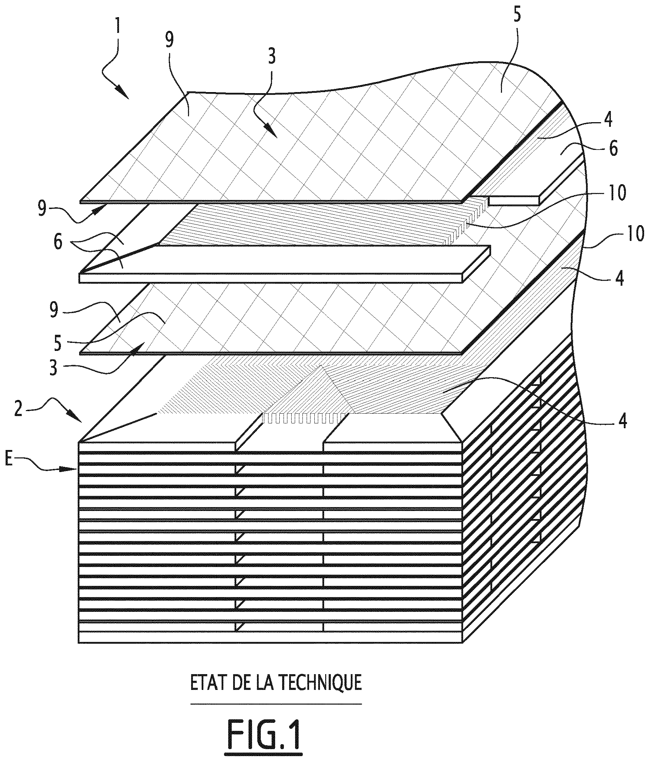

Une telle matrice est connue et un exemple est montré à la figure 1.

Les échangeurs de chaleur à plaques gravées ont une matrice obtenue par un empilement de plaques sur lesquelles une gravure a été préalablement pratiquée sur une face. Cette gravure définit un passage dans lequel circulent les fluides. La face non-gravée des plaques est enduite d'un revêtement de brasure ce qui permet de les assembler par brasage en une seule opération dans un four à braser pour obtenir une matrice.

WO 2004/040038 décrit un échangeur de chaleur dans lequel une couche de zinc est déposée sur les faces externes de tubes. Le document décrit un procédé selon le préambule de la revendication 1.

La Fig. 1 illustre un exemple de matrice 2 d'un échangeur 1 de chaleur à ondes 4, barres 6 et tôles de séparation 5. Elle est constituée d'un empilement d'ensembles d'ondes 4, également appelées « tapis ondulés », de barres 6 et de tôles de séparation 5. Les tôles de séparation 5 sont enduites sur chaque face 9 d'une couche de brasure 3 mise en évidence par un hachurage. Les faces 9 des tôles de séparation 5 peuvent ainsi être qualifiées de zones 9 prévues à assurer la liaison mécanique entre les composants de la matrice 2. Les tôles 5 sont empilées, espacées par des tapis ondulés ayant sur leur pourtour des barres 6 de section rectangulaire, pour former une matrice.

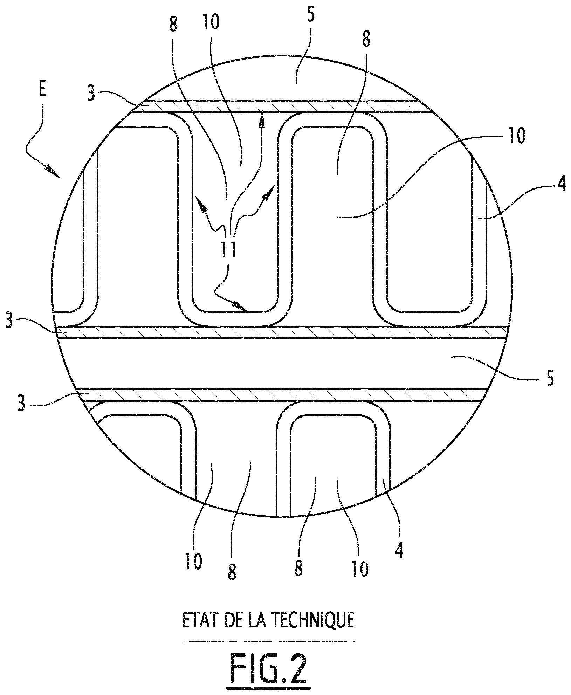

En référence à la figure 2, les espaces E entre les tôles de séparation 5 constituent des passages 10 dans lesquels circulent les fluides. Chaque passage 10 de circulation de fluide a une paroi interne 11 définissant le passage 10 et prévue pour contenir ledit fluide à l'intérieur du passage 10. La paroi interne 11 couvre tout le pourtour interne du passage 10 et de préférence également la surface interne des barres.

Cet empilement est ensuite assemblé en une seule opération dans un four à braser pour obtenir une matrice.

La matrice comprend généralement une première et dernière plaque d'une épaisseur plus importante que les plaques gravées ou les tôles de séparation 5.

Des têtes d'alimentation en fluides sont ajoutées à la matrice pour constituer un échangeur. Des pièces intermédiaires de liaison entre la matrice et les têtes d'alimentation peuvent être utilisées.

Le nombre et la conception des passages 10 dans l'échangeur 1 sont adaptés aux performances que doit réaliser l'appareil.

Le choix du matériau utilisé dans la fabrication de ces équipements est dicté par des considérations de tenue mécanique et de durabilité. Pour des équipements soumis à des environnements corrosifs, il devient nécessaire d'adapter la solution matériaux à l'environnement, ce qui contraint le plus souvent à utiliser des matériaux coûteux dont les formats ne sont pas toujours adaptés à la fabrication d'échangeurs à tôles de séparation, barres et ondes ou à plaques gravées. L'utilisation de matériaux à bas coût, facilement disponibles dans les formats ou formes souhaités, n'est envisageable que si ceux-ci sont protégés contre la corrosion. En outre, la protection de ces équipements contre la corrosion permet d'étendre leur domaine d'utilisation tout en leur assurant une meilleure longévité.

On peut envisager un traitement anticorrosion post-brasage de tels équipements, mais cela est rendu difficile du fait de l'inaccessibilité de la structure brasée et de la tortuosité du réseau que forment les tapis ondulés disposés entre les tôles de séparation. Peu de techniques permettent potentiellement de réaliser ce type de protection, en particulier lorsque ces équipements fonctionnent à des températures élevées. Les dépôts électrolytiques auto-catalytiques ne sont envisageables que si la température de fonctionnement de ces équipements n'excède pas les 200°C, température au-delà de laquelle la résistance à la corrosion de ces revêtements devient inopérante. Un traitement par voie chimique (pack cémentation) pourrait être une alternative aux procédés électrochimiques, mais nécessite, outre la maitrise de l'introduction et de la répartition dans la structure de la matrice des éléments précurseurs à la constitution du revêtement anticorrosion, la pratique d'un traitement thermique supplémentaire généralement réalisé à haute température. Pratiqué à des températures proches de la température de fusion de l'alliage de brasage, le traitement thermique est susceptible de nuire à la qualité métallurgique de l'assemblage en particulier en initiant un vieillissement prématuré de la brasure. En outre, la pratique d'un revêtement anticorrosion post-brasage dans ce type d'architecture ne permet pas de rendre compte de la qualité du revêtement ainsi obtenu.

La pratique d'un traitement anticorrosion préalable au brasage des plaques gravées ou des tapis ondulés, des tôles de séparation et des barres n'est envisageable que si celle-ci ne nuit pas aux opérations de brasage ultérieures. Inversement, les qualités du revêtement anticorrosion ne doivent pas être dégradées lors de la mise en oeuvre de l'opération de brasage.

L'invention permet de palier à ces insuffisances. Un but de l'invention est notamment de proposer un procédé de fabrication associé assurant une bonne résistance à la corrosion de la matrice dans des applications où elle est traversée par un ou plusieurs fluides corrosifs, notamment à une température élevée, par exemple supérieur à 200°C. La matrice selon l'invention doit également pouvoir être utilisée dans des échanges thermiques impliquant de l'eau salée, telle que l'eau de mer.

En revêtant complètement les parois internes des passages fluidiques d'un revêtement anticorrosion, un fluide corrosif traversant la matrice ne peut plus corroder les parties internes de la matrice.

La matrice comporte la caractéristique selon laquelle le revêtement anticorrosion a une épaisseur inférieure ou égale à 100 µm, dans toutes les combinaisons techniquement possibles.

Les buts ci-dessus sont atteints avec un procédé de fabrication selon la revendication 1.

Selon des modes de réalisation préférés, le procédé comporte l'une, plusieurs ou toutes les caractéristiques correspondant aux revendications 2 à 4, ou les caractéristiques suivantes, dans toutes les combinaisons techniquement possibles :
- l'étape c) est effectuée par trempage desdits composants à rigoles dans un bain d'un produit anticorrosion, puis extraction desdits composants du bain ;
- le produit anticorrosion est présent dans le bain sous forme de grains dispersés d'une taille allant d'environ 5 à 100 µm, de préférence allant d'environ 20 à 65 µm, le taux de charge de grains dans le bain étant compris entre environ 30 et 60 % volume, l'extraction étant effectuée à une vitesse comprise entre environ 5 et 30 mm/s ;
- le cycle thermique selon l'étape f) débute par une première phase de chauffage de la matrice empilée à une température de séchage déterminée, suivie d'une deuxième phase de maintien, pendant une durée de séchage déterminée, de la matrice à la température de séchage, séchant ainsi la couche anticorrosion ;
- la deuxième phase est suivie d'une troisième phase de chauffage de la matrice empilée à une température de brasage déterminée supérieure à la température de séchage, suivie d'une quatrième phase de maintien, pendant une durée de brasage déterminée, de la matrice à la température de brasage, brasant ainsi la matrice et synthétisant ainsi le revêtement anticorrosion ;
- l'étape c) est précédée d'un décapage des surfaces desdites rigoles.

L'invention sera mieux comprise à l'étude de la description détaillée suivante, donnée uniquement à titre illustratif et non limitatif, en référence aux figures, parmi lesquelles :
La figure 1 est une vue éclatée en perspective d'une matrice d'échangeur de chaleur selon l'état de la technique ;
La figure 2 est un détail de passages fluidiques de la matrice de la figure 1, avant le brasage de la matrice ;
La figure 3 est une vue éclatée en perspective d'une matrice d'échangeur de chaleur; et
La figure 4 est un détail de passages fluidiques de la matrice de la figure 3, avant le brasage de la matrice.

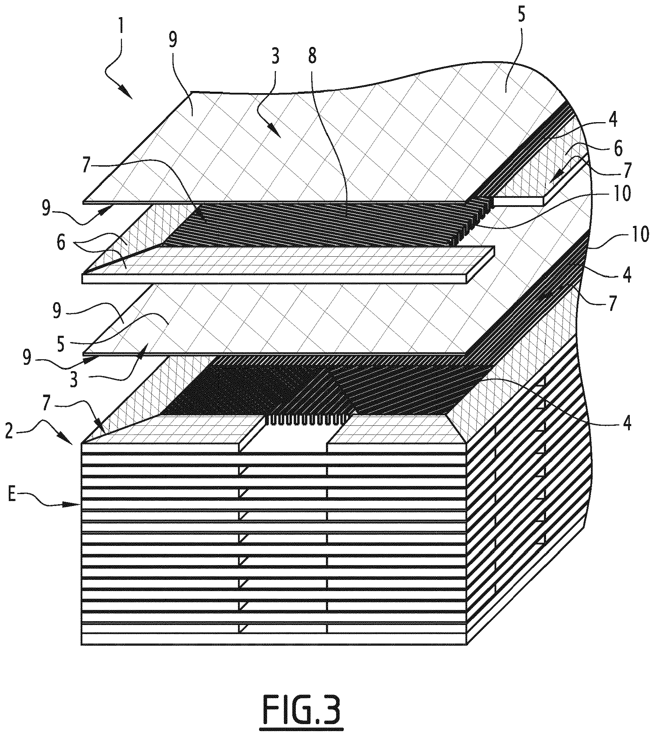

Il est maintenant fait référence à la figure 3. Par la suite, pour simplifier la description, nous ferons référence à un échangeur 1 dont la matrice 2 est composée d'un empilement d'ondes 4, de barres 6 et de tôles de séparation 5, sachant que la description s'applique également à une matrice composée d'un empilement de plaques gravées, ou à une matrice comprenant une combinaison de ces deux empilements.

On notera que les ondes 4 et les plaques gravées (non représentées) de ces types de matrices définissent des rigoles 8 d'acheminement de fluide.

Le revêtement anticorrosion est déposé sur les pièces à assembler (notamment sur les ondes 4 et les barres 6) avant l'empilement de la matrice et, de ce fait, avant le brasage.

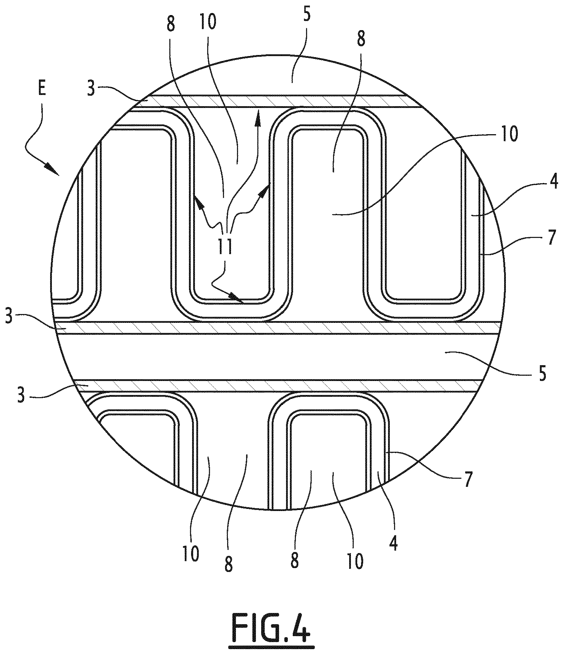

Selon un premier exemple de réalisation, le revêtement anticorrosion 7, identifié sur les barres 6 par un hachurage, et sur les ondes 4 par un trait épais, est composé du même alliage que l'alliage de brasage. On distingue mieux le revêtement anticorrosion 7 sur les ondes 4 dans le détail représenté par la figure 4. Pour chaque passage de circulation de fluide 10, le revêtement anticorrosion 7 est présent sur les trois surfaces de la paroi interne 11 constituées par des parties d'onde. Pour la quatrième surface de la paroi interne 11 constituée d'une partie de tôle de séparation 5, le revêtement anticorrosion est réalisé par la brasure 3. Le revêtement anticorrosion est également présent sur les faces internes des barres 6 qui sont en contact avec les fluides traversant la matrice 2.

Selon une variante de réalisation, le revêtement anticorrosion 7 est composé d'un alliage de la même famille que l'alliage de brasage ayant une température de fusion proche de celle de la brasure 3.

Par famille d'alliages, on entend les alliages dont les éléments majeurs entrant dans leur composition sont sensiblement identiques. Par exemple, pour un alliage de brasage majoritairement composé de Nickel, Chrome, Bore et Silicium (NiCrBSi), le revêtement anticorrosion 7 peut être composé de Nickel, Chrome et Silicium (NiCrSi) ou de Nickel, Chrome, Bore et Silicium (NiCrBSi) dans des proportions différentes ou encore de Nickel, Chrome, Silicium et Phosphore (NiCrSiP).

Le revêtement anticorrosion 7 prend la forme d'une couche mince, de préférence d'une épaisseur de l'ordre ou inférieure à la centaine de microns.

Le revêtement anticorrosion 7 peut, par exemple, être déposé par trempage des composants 4, 5, 6 de la matrice 2 dans un bain de liquide et retrait de celui-ci (« dip coating »). Il est alors élaboré à partir d'une suspension constituée d'un solvant, de nature organique ou aqueuse, d'un agent mouillant et d'une poudre de l'alliage anticorrosion dont la granulométrie des grains est choisie entre 5 et 100 µm et de façon plus avantageuse entre 20 et 65 µm.

La poudre peut avoir une composition différente de celle de la brasure 3 tant que la température de fusion du revêtement anticorrosion 7 synthétisé reste proche de celle de la brasure. L'ajout d'un agent activant peut être nécessaire, par exemple du tétraborate de sodium (Na₂B₄O₇), pour une poudre en alliage de Nickel, Chrome, Bore et Silicium (NiCrBSi).

Avantageusement, l'écart de température sur le point de fusion entre la brasure 3 et le revêtement anticorrosion 7 synthétisé est inférieur à 50°C.

Le revêtement anticorrosion 7 est obtenu à partir d'une mixture ou couche déposée à la surface des pièces 4, 5, 6 après l'immersion dans le bain. Cette couche anticorrosion peut, selon la nature de l'alliage de brasage et de la granulométrie de la poudre d'alliage contenue dans la couche anticorrosion, être complétée par un agent dispersant ou par un liant.

Préalablement à l'immersion dans le bain, une préparation des surfaces des composants 4, 5, 6 de la matrice 2 peut être nécessaire pour assurer la qualité du revêtement anticorrosion.

Selon une autre variante, un agent activant peut être ajouté dans le bain afin de permettre d'une part la désoxydation (le décapage) in-situ des surfaces revêtues et d'autre part d'améliorer la constitution du revêtement. A cet effet, on choisira de préférence un fluorure, tel que le fluorure de potassium d'aluminium (KAIF₄), ou un chlorure à forte tension de vapeur, ou un composé au bore dont le point de fusion est proche de celui de la brasure 3, par exemple le tétraborate de sodium (Na₂B₄O₇).

L'ajustement de la vitesse d'extraction des composants 4, 5, 6 de la matrice 2 du bain et du taux de charge solide dans ce bain, permet de jouer sur l'épaisseur du dépôt de couche anticorrosion. Avantageusement, les composants 4, 5, 6 de la matrice 2 sont retirés du bain dans une position sensiblement verticale, ou sont placés temporairement dans une position sensiblement verticale après leur sortie du bain, pour permettre le ruissellement du liquide en excès. Un essorage par jet d'air des composants 4, 5, 6 retirés peut également être réalisé. De façon avantageuse, on choisira un taux de charge solide dans le bain compris entre 30 et 60 % Vol pour les granulométries citées ci-dessus, et une vitesse d'extraction comprise entre 5 et 30 mm/s.

Dans le four de brasage, la couche anticorrosion est dans un premier temps séchée lors de la montée en température. Cette étape de séchage effectuée pendant le cycle de brasage permet l'évaporation du solvant organique ou aqueux de la couche anticorrosion afin de constituer un revêtement anticorrosion précurseur. De préférence, l'étape de séchage consiste en un maintien, pendant un temps de séchage déterminé, de la matrice 2 à une température de séchage sensiblement isotherme pratiqué entre 350 et 500°C. Le temps de séchage est ajusté en fonction de la taille et de la masse de la matrice 2 à traiter. Il est par exemple de 2 à 6h pour une matrice 2 de quelques centaines de kilogramme équivalant à une pièce de 25 cm x 30 cm x 200 cm.

Le revêtement anticorrosion 7 est ensuite synthétisé à la température de brasage, c'est-à-dire à la température de fusion de l'alliage de brasage, cette température de fusion étant de préférence, selon la nature de l'alliage utilisé, entre 950°C et 1200°C.

La phase métallique étant fusionnée à la température de brasage, elle peut alors s'étaler pour former le revêtement anticorrosion 7 qui deviendra, après refroidissement, une couche dure, adhérente et résistante à la corrosion. A la figure 3, ce revêtement 7 est mis en évidence sur les barres 6 par un hachurage, et sur les ondes 4 par un trait épais.

Le cycle de brasage permet d'un côté de faire fondre la phase métallique de la couche anticorrosion et ainsi, par mouillage, d'étaler celle-ci dans la structure interne de la matrice en assurant la protection contre la corrosion, et d'un autre côté de former les ménisques de brasure entre les jonctions ondes 4/tôles 5 et barres 6/tôles 5 afin d'assurer l'étanchéité et la tenue mécanique de la matrice 2.

Lors de la fusion de la couche anticorrosion, un revêtement 7 dense et protecteur est formé sur les surfaces des ondes 4, tôles 5 et barres 6 qui isole le substrat de son environnement. La tenue à la corrosion en est améliorée en particulier pour les matrices 2 élaborées en acier carbone.

Un échangeur de chaleur est obtenu en ajoutant des têtes de distribution à la matrice 2 après son empilage. L'ensemble constitué par la matrice 2 et les têtes de distribution est placé dans le four de brasage pour y réaliser en une seule opération l'assemblage de l'échangeur de chaleur et la protection contre la corrosion de la matrice 2. Si la matière des têtes de distribution n'a pas une résistance suffisante à la corrosion, au moins leurs surfaces internes en contact avec un fluide corrosif sont au préalable recouvertes d'une couche de suspension anticorrosion telle que définie ci-dessus.

Des pièces intermédiaires de connexion de tête de distribution sont placées entre les têtes de distribution et la matrice 2. L'ensemble constitué par l'empilage des ondes 4, des barres 6, des tôles de séparation 5 et des pièces intermédiaires est placé dans le four de brasage pour y réaliser en une seule opération l'assemblage de l'ensemble et la protection contre la corrosion de la matrice 2. Les pièces intermédiaires peuvent au préalable être recouvertes d'une couche de suspension anticorrosion telle que définie ci-dessus si leur matière n'a pas une résistance suffisante à la corrosion.

Les tôles de séparation 5 sont traditionnellement revêtues de brasure 3 sur leurs deux faces. Pour renforcer l'intégrité mécanique de la matrice brasée 2 en consolidant l'adhérence entre ses composants, une quantité d'alliage anticorrosion contribuant au brasage peut être amenée sur le revêtement de brasure 3 des tôles de séparation 5 sous la forme d'une couche de suspension anticorrosion telle que définie ci-dessus. Cette quantité supplémentaire ou double-couche (couche de brasure + couche anticorrosion) permet le renforcement de la liaison entre les tôles de séparation 5 et les ondes 4.

Selon une autre variante, la brasure 3, qui sert d'ailleurs aussi de protection contre la corrosion, peut être déposée à la surface 9 des tôles de séparation 5 ou des plaques gravées par un moyen traditionnel de dépose. Cette variante est avantageusement utilisée lorsqu'il est nécessaire, pour garantir l'intégrité mécanique de la matrice 2, d'utiliser, des épaisseurs de brasure 3 supérieures à une centaine de microns.

Pour les matrices d'échangeur de chaleur à plaques gravées, une variante de réalisation consiste à graver des plaques non revêtues de brasure, puis à recouvrir l'ensemble des plaques d'une couche anticorrosion, par exemple par immersion dans un bain tel que décrit ci-dessus. Le revêtement anticorrosion 7 assure alors les deux fonctions, protection contre la corrosion et brasure pour l'assemblage.

La couche anticorrosion peut également être déposée par vaporisation puis condensation d'une phase métallique sur la surface des éléments à revêtir, avant l'empilage de la matrice 2, ou par voie chimique comme dans un processus de cémentation.

La présente invention est particulièrement avantageuse pour les matrices d'échangeurs de chaleur dont les composants sont en acier carbone ou en acier inoxydable.

## Revendications

1. Procédé de fabrication d'une matrice (2) métallique brasée d'échangeur de chaleur (1) adaptée à la circulation de fluide corrosif en son sein, la matrice (2) comprenant un empilement de composants (4, 5, 6), notamment de plaques gravées ou d'ondes (4), de tôles de séparation (5) et de barres (6), ou une combinaison des deux types d'empilement, certains desdits composants (4, 5, 6) définissant des rigoles (8) d'acheminement dudit fluide corrosif,
le procédé comprenant les étapes consécutives consistant à :
a) prévoir lesdits composants (4, 5, 6) de la matrice (2) ;
b) déposer une couche de brasure (3) sur des zones (9) desdits composants prévues pour assurer la liaison mécanique entre les composants ;
c) recouvrir, d'une couche anticorrosion, lesdites rigoles (8) et de préférence les barres (6) ;
d) empiler les composants, formant ainsi la matrice (2) ;
e) placer la matrice (2) empilée dans un four de brasage ; et
f) faire suivre un cycle thermique à la matrice (2), réalisant ainsi en une seule opération le brasage de la matrice (2) et le recouvrement de ses passages fluidiques (10) d'un revêtement anticorrosion (7),
**caractérisé en ce que** le cycle thermique comprend une étape de séchage permettant l'évaporation du solvant organique ou aqueux de la couche anticorrosion pour constituer un revêtement anticorrosion précurseur, l'étape de séchage étant pratiquée à une température de séchage isotherme entre 350 et 500°C pendant un temps de séchage déterminé, le cycle thermique comprenant une étape ultérieure dans laquelle le revêtement anticorrosion (7) est synthétisé à une température de brasage comprise entre 950 et 1200°C.

2. Procédé selon la revendication 1, dans lequel la couche de brasure (3) et la couche anticorrosion sont constituées du même produit.

3. Procédé selon la revendication 1, dans lequel la couche de brasure (3) et la couche anticorrosion sont constituées de deux produits différents dont la différence de température de fusion n'excède pas 50°C.

4. Procédé selon l'une quelconque des revendications précédentes, dans lequel la couche anticorrosion est une suspension comprenant un solvant liquide, un agent mouillant, et une poudre d'alliage métallique, notamment une poudre d'un alliage à base de Nickel et de Chrome.

## Patentansprüche

1. Verfahren zum Herstellen einer gelöteten Metallmatrix (2) eines Wärmetauschers (1), die für die Zirkulation von korrosivem Fluid in ihrem Inneren geeignet ist, die Matrix (2) umfassend einen Stapel von Komponenten (4, 5, 6), insbesondere von gravierten oder Wellenplatten (4), von Trennblechen (5) und von Stäben (6) oder eine Kombination der zwei Stapelarten, wobei gewisse der Komponenten (4, 5, 6) Beförderungsrinnen (8) des korrosiven Fluids definieren,
das Verfahren umfassend die aufeinanderfolgenden Schritte, bestehend aus:
a) Bereitstellen der Komponenten (4, 5, 6) der Matrix (2);
b) Aufbringen einer Lötschicht (3) auf Bereiche (9) der Komponenten, die zum Sicherstellen der mechanischen Verbindung zwischen den Komponenten vorgesehen sind;
c) Bedecken der Rinnen (8) und vorzugsweise der Stäbe (6) mit einer korrosionsbeständigen Schicht;
d) Stapeln der Komponenten, wobei auf diese Art die Matrix (2) ausgebildet wird;
e) Platzieren der gestapelten Matrix (2) in einem Lötofen; und
f) anschließendes Anwenden eines Wärmezyklus auf die Matrix (2), wobei auf diese Art in einem einzigen Vorgang das Löten der Matrix (2) und das Bedecken ihrer Fluiddurchgänge (10) mit einer korrosionsbeständigen Beschichtung (7) durchgeführt wird,
**dadurch gekennzeichnet, dass**
der Wärmezyklus einen Trocknungsschritt umfasst, der die Verdampfung des organischen oder wässrigen Lösungsmittels der korrosionsbeständigen Schicht zum Bilden einer korrosionsbeständigen Vorläuferbeschichtung ermöglicht, wobei der Trocknungsschritt bei einer isothermen Trocknungstemperatur zwischen 350 und 500 °C während einer bestimmten Trocknungszeit ausgeführt wird, der Wärmezyklus umfassend einen anschließenden Schritt, bei dem die korrosionsbeständige Beschichtung (7) bei einer Löttemperatur zwischen 950 und 1200 °C synthetisiert wird.

2. Verfahren nach Anspruch 1, wobei die Lötschicht (3) und die korrosionsbeständige Schicht aus demselben Produkt bestehen.

3. Verfahren nach Anspruch 1, wobei die Lötschicht (3) und die korrosionsbeständige Schicht aus zwei unterschiedlichen Produkten bestehen, deren Schmelztemperaturdifferenz 50 °C nicht überschreitet.

4. Verfahren nach einem der vorstehenden Ansprüche, wobei die korrosionsbeständige Schicht eine Suspension ist, umfassend ein flüssiges Lösungsmittel, ein Benetzungsmittel und ein Metalllegierungspulver, insbesondere ein Legierungspulver auf Basis von Nickel und von Chrom.

## Claims

1. Method for manufacturing a brazed metal matrix (2) of a heat exchanger (1), which matrix is suitable for the circulation of corrosive fluid therein, the matrix (2) comprising a stack of components (4, 5, 6), in particular etched plates or corrugations (4), separating sheets (5) and bars (6), or a combination of the two stack types, some of said components (4, 5, 6) defining channels (8) for conveying said corrosive fluid,
the method comprising the consecutive steps of:
a) providing said components (4, 5, 6) of the matrix (2);
b) depositing a layer of brazing material (3) onto regions (9) of said components intended to provide the mechanical connection between the components;
c) covering, with an anti-corrosion layer, said channels (8) and preferably the bars (6);
d) stacking the components, thus forming the matrix (2);
e) placing the stacked matrix (2) in a brazing furnace; and
f) subjecting the matrix (2) to a heat cycle, thus performing, in a single operation, the brazing of the matrix (2) and the covering of its fluidic passages (10) with an anti-corrosion coating (7),
**characterized in that**
the heat cycle comprises a drying step allowing the evaporation of the organic or aqueous solvent from the anti-corrosion layer to form an anti-corrosion precursor coating, the drying step being carried out at an isothermal drying temperature between 350 and 500°C for a determined drying time, the heat cycle comprising a subsequent step in which the anti-corrosion coating (7) is synthesized at a brazing temperature of between 950 and 1,200°C.

2. Method according to claim 1, wherein the layer of brazing material (3) and the anti-corrosion layer are made of the same product.

3. Method according to claim 1, wherein the layer of brazing material (3) and the anti-corrosion layer are made of two different products of which the melting temperature difference does not exceed 50°C.

4. Method according to any of the preceding claims, wherein the anti-corrosion layer is a suspension comprising a liquid solvent, a wetting agent, and a metal alloy powder, in particular a powder of an alloy based on nickel and chromium.
